# EUROPEAN PATENT APPLICATION

(11) **EP 4 800 803 A1**
(43) Date of publication of application: **02.09.2026**
(21) Application number: 26160761.8
(22) Date of filing: 25.02.2026
(51) Int. Cl.: H01M 10/48, H01M 10/613, H01M 10/63

(54) **BATTERY APPARATUS**

(30) Priority: 27.02.2025 KR 20250025789; 18.07.2025 KR 20250097489
(71) Applicant: SK On Co., Ltd., Seoul 03161 (KR)
(72) Inventor: HWANG, Kyu Min, 34124 Daejeon (KR); LEE, Jae Hee, 34124 Daejeon (KR); LEE, Hyun Jun, 34124 Daejeon (KR); JON, Ung, 34124 Daejeon (KR); CHOI, So Yeon, 34124 Daejeon (KR)
(74) Representative: Prüfer & Partner mbB Patentanwälte · Rechtsanwälte

(57) **Abstract**

A battery apparatus is disclosed including a cell assembly including a plurality of battery cells; a housing having an accommodation space accommodating the cell assembly therein; a cooling port allowing a cooling fluid to flow into the accommodation space; a plurality of cell monitoring units disposed in the accommodation space to monitor the plurality of battery cells, respectively; and an antenna disposed outside the accommodation space and performing wireless communication with the plurality of cell monitoring units.

## Description

### TECHNICAL FIELD

The disclosure and implementations disclosed in this patent document generally relate to a battery apparatus.

### BACKGROUND

Batteries are widely used not only in small electronic devices such as mobile phones and laptops, but also in medium-to-large pieces of machinery, such as electric vehicles or energy storage systems, and are implementable as secondary batteries, thereby enabling charging and reuse thereof.

Safety of a battery may affect safety of an electronic device or machinery including the battery, thus ensuring safety of the battery is important. Monitoring information for a battery (e.g., voltage or temperature) may be used to ensure safety of the battery, and a battery management system (BMS) may manage the battery based on the monitoring information.

Meanwhile, heat may occur in a battery cell due to electrochemical reactions occurring during charging and discharging processes. When such heat fails to be rapidly discharged, heat may accumulate in an internal space of a battery module or a battery pack, resulting in degradation of performance or a risk of fire in severe cases.

### SUMMARY

A cooling fluid may effectively cool an interior of a battery apparatus. However, in order to facilitate smooth flow of the cooling fluid, a structure for transmitting monitoring information of the battery apparatus (and/or a structure for monitoring the battery apparatus) may require simplification.

The present disclosure can be implemented in some embodiments to provide a battery apparatus capable of simplifying a structure for transmitting monitoring information of the battery apparatus (and/or a structure for monitoring the battery apparatus), while ensuring effective cooling performance by a cooling fluid.

In some embodiments of the present disclosure, a battery apparatus includes: a cell assembly including a plurality of battery cells; a housing having an accommodation space accommodating the cell assembly therein; a cooling port allowing a cooling fluid to flow into the accommodation space; a plurality of cell monitoring units disposed in the accommodation space to monitor the plurality of battery cells, respectively; and an antenna disposed outside the accommodation space and performing wireless communication with the plurality of cell monitoring units.

The plurality of cell monitoring units may be disposed on the plurality of battery cells and positioned between the cell assembly and the antenna, and the housing may include a non-conductive wireless communication region positioned between the plurality of cell monitoring units and the antenna.

The housing may further include a conductive covering region surrounding the wireless communication region.

The antenna may extend in an arrangement direction of the plurality of cell monitoring units.

The cooling port may include an inlet cooling port disposed on one side of the housing and allowing the cooling fluid to flow into the accommodation space, and an outlet cooling port disposed on the other side of the housing and allowing the cooling fluid to flow out from the accommodation space.

A direction in which the inlet cooling port and the outlet cooling port face each other and an arrangement direction of the plurality of cell monitoring units may not be parallel to each other, and the cell assembly may be disposed to allow at least a portion of the cooling fluid to flow, in the accommodation space, through a space between the plurality of cell monitoring units and the antenna.

The battery apparatus may further include a battery management controller for receiving a monitoring value from each of the plurality of cell monitoring units through the antenna and performing a predetermined battery management operation.

One of the plurality of cell monitoring units may receive, through the antenna, monitoring values from the remaining ones of the plurality of cell monitoring units.

Each of the plurality of cell monitoring units may monitor at least one of a voltage, an internal resistance, a current, a temperature of a corresponding battery cell, or a combination thereof among the plurality of battery cells, and each of the plurality of cell monitoring units may include a semiconductor integrated circuit electrically connected between at least two lead tabs of the corresponding battery cell among the plurality of battery cells.

At least one of the plurality of cell monitoring units may further include a printed circuit board electrically connected between the at least two lead tabs of the corresponding battery cell among the plurality of battery cells, and the semiconductor integrated circuit of the at least one of the plurality of cell monitoring units may be disposed on the printed circuit board and is electrically connected, through the printed circuit board, between the at least two lead tabs of the corresponding battery cell among the plurality of battery cells.

The number of the plurality of cell monitoring units may be less than the number of the plurality of battery cells, and the semiconductor integrated circuit of at least one of the plurality of cell monitoring units may be electrically connected to at least two battery cells included in a portion of the plurality of battery cells.

Each of the plurality of battery cells may include a case and at least two lead tabs protruding from opposite sides of the case, respectively, and each of the plurality of cell monitoring units may be disposed in a corner region of one surface of the case of a corresponding battery cell among the plurality of battery cells, the one surface facing an adjacent battery cell, and may be electrically connected to the at least two lead tabs through the one surface.

The plurality of cell monitoring units may correspond one-to-one to the plurality of battery cells to monitor the plurality of battery cells, respectively.

Each of the plurality of cell monitoring units may convert a monitoring value for a corresponding battery cell among the plurality of battery cells into a wireless communication signal and transmit the wireless communication signal to the antenna.

In some embodiments of the present disclosure, a battery apparatus includes: a cell assembly including a plurality of battery cells; a housing having an accommodation space accommodating the cell assembly therein; a cooling port allowing a cooling fluid to flow into the accommodation space; and a plurality of cell monitoring units disposed in the accommodation space to monitor the plurality of battery cells, respectively, wherein the housing includes a wireless communication region formed of a non-conductive material and a covering region surrounding the wireless communication region and formed of a material different from the material included in the wireless communication region, and each of the plurality of cell monitoring units are disposed between the plurality of battery cells and the wireless communication region.

The cooling port may include an inlet cooling port disposed on one side of the housing and allowing the cooling fluid to flow into the accommodation space, and an outlet cooling port disposed on the other side of the housing and allowing the cooling fluid to flow out from the accommodation space, and the covering region is conductive.

An arrangement direction of the plurality of cell monitoring units may not be parallel to a direction in which the inlet cooling port and the outlet cooling port face each other, and the cell assembly may be disposed to allow at least a portion of the cooling fluid to flow, in the accommodation space, through a space between the plurality of cell monitoring units and the wireless communication region.

The plurality of cell monitoring units may be arranged in an arrangement direction of the plurality of battery cells, and the wireless communication region may extend in an arrangement direction of the plurality of cell monitoring units.

Each of the plurality of cell monitoring units may convert a monitoring value for each of the plurality of battery cells into a wireless communication signal and transmit the wireless communication signal to an exterior of the accommodation space through the wireless communication region.

Each of the plurality of cell monitoring units may monitor at least one of a voltage, an internal resistance, a current, a temperature of a corresponding battery cell, or a combination thereof among the plurality of battery cells, and each of the plurality of cell monitoring units may include a semiconductor integrated circuit electrically connected between at least two lead tabs of the corresponding battery cell among the plurality of battery cells.

### BRIEF DESCRIPTION OF DRAWINGS

Certain aspects, features, and advantages of the present disclosure are illustrated by the following detailed description with reference to the accompanying drawings.
FIG. 1A is a schematic perspective view of a battery apparatus according to an embodiment of the present disclosure.
FIG. 1B is a schematic perspective view of a battery apparatus according to an embodiment of the present disclosure.
FIG. 1C is a schematic perspective view of a battery apparatus according to an embodiment of the present disclosure.
FIG. 1D is a schematic perspective view of a battery apparatus according to an embodiment of the present disclosure.
FIG. 1E is a schematic perspective view of a battery apparatus according to an embodiment of the present disclosure.
FIG. 2 is an exploded perspective view of a battery apparatus according to an embodiment of the present disclosure.
FIG. 3 is a cross-sectional view taken along line I-I' of FIG. 1A.
FIG. 4 is a cross-sectional view taken along line II-II' of FIG. 1A, illustrating a state in which a cell monitoring unit and a cell support are excluded.
FIG. 5 is a schematic perspective view of a battery apparatus according to an embodiment of the present disclosure.
FIG. 6 is a plan view of the battery apparatus according to an embodiment of the present disclosure.
FIG. 7 is a side view of the battery apparatus according to an embodiment of the present disclosure.
FIGS. 8 and 9 are circuit diagrams of the battery apparatuses according to the embodiments of the present disclosure.
FIG. 10 is a perspective view illustrating a structure in which a cell monitoring unit of the battery apparatus according to an embodiment of the present disclosure is disposed in a cell assembly.
FIG. 11 is a perspective view illustrating a structure in which the cell monitoring unit of the battery apparatus according to an embodiment of the present disclosure is electrically connected to at least two lead tabs of a battery cell.

### DETAILED DESCRIPTION

Features of the present disclosure disclosed in this patent document are described by example embodiments with reference to the accompanying drawings.

The present disclosure can be implemented in some embodiments to provide a battery apparatus.

Other specific details of other embodiments are described in the detailed description and the accompanying drawings.

Various advantages and features of the present disclosure and methods accomplishing them will become apparent from the following description of embodiments described below in detail with reference to the accompanying drawings. However, the present disclosure is not limited to the embodiments described below, and may be implemented in various different forms. The embodiments are provided only to make the present disclosure complete and to allow those skilled in the art to completely appreciate the scope of the present disclosure. Accordingly, the scope of the present disclosure is defined only by the scope of the claims. Throughout the specification, the same reference numerals may refer to the same components.

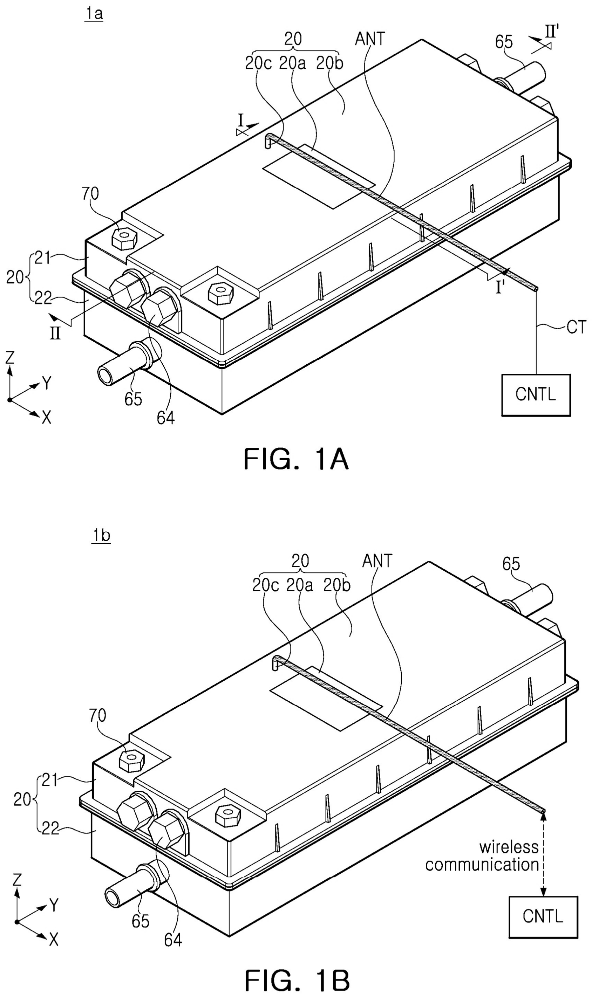

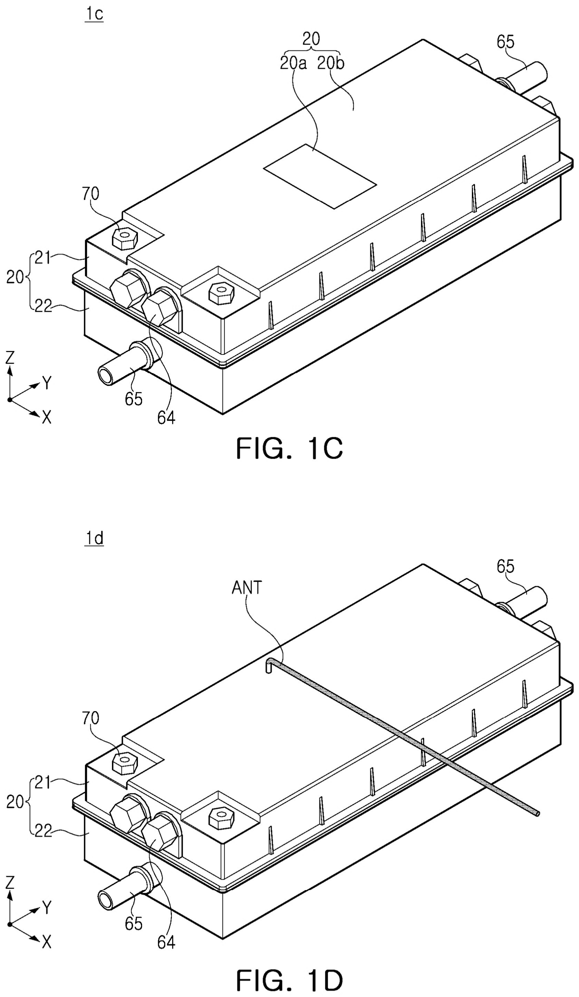

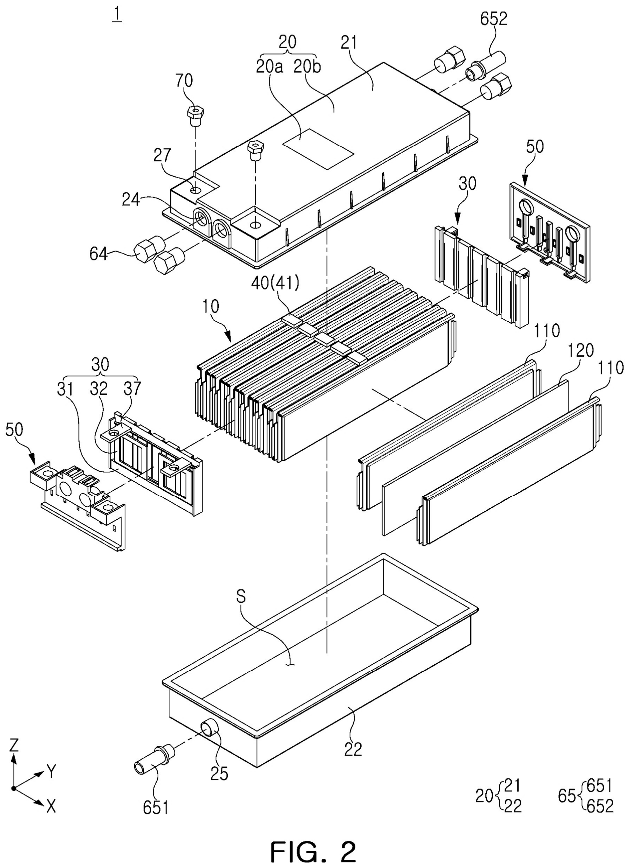

Referring to FIGS. 1A, 1B, 1C, 1D, 1E, 2, and 5, each of battery apparatuses 1, 1a, 1b, 1c, 1d, 1e, and 1f according to embodiments of the present disclosure may be implemented as a battery module or a battery pack, and are not limited thereto. The battery pack may include a plurality of battery modules. Each of the plurality of battery modules may include a plurality of battery cells 110 (see FIG. 2). An internal structure of a housing 20 included in each of the battery apparatuses 1a, 1b, 1c, and 1d illustrated in FIGS. 1A, 1B, 1C, and 1D may be substantially identical to at least a portion of the battery apparatus 1 illustrated in FIG. 2.

Referring to FIGS. 1A and 2, each of the battery apparatuses 1 and 1a according to the embodiments of the present disclosure may include a cell assembly 10, the housing 20, a cooling port 65, a plurality of cell monitoring units 40, and an antenna (ANT).

The cell assembly 10 may include a plurality of battery cells 110. The plurality of battery cells 110 may be disposed in an accommodation space S of the housing 20 in a predetermined direction (an X-axis direction in the drawings). The battery cell 110 may be implemented as a secondary battery. For example, the battery cell 110 may be implemented as a lithium-ion battery, and is not limited thereto. For example, the battery cell 110 may be implemented as a nickel-cadmium battery, a nickel-metal hydride battery, or a nickel-hydrogen battery that is chargeable and dischargeable. For example, each of the plurality of battery cells 110 may be implemented as one of a pouch-type, a cylindrical type, and a prismatic type, but is not limited thereto.

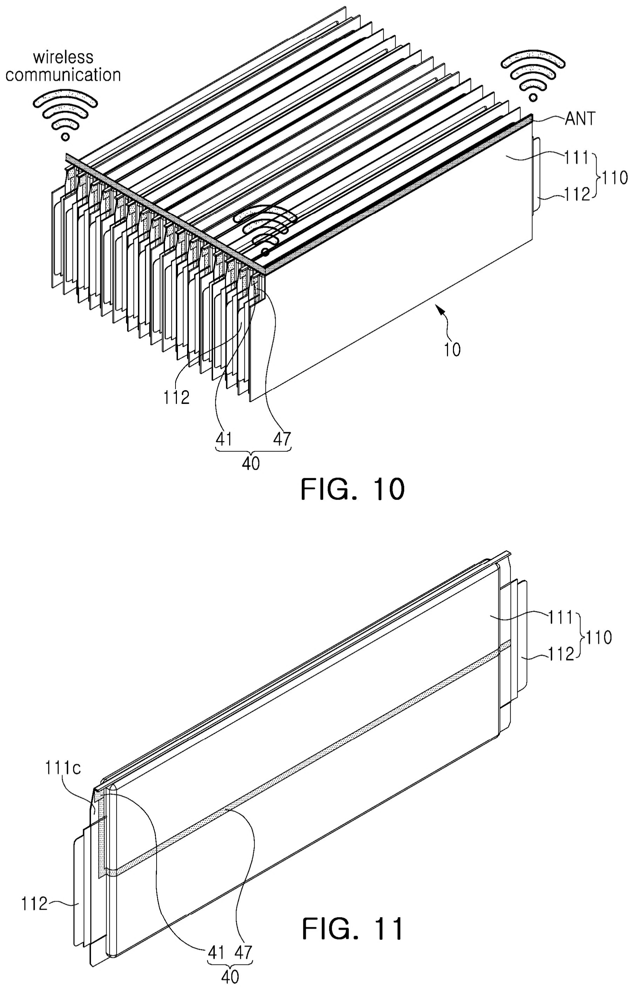

For example, each of the plurality of battery cells 110 may include a case accommodating an electrode assembly and an electrolyte, and a lead tab 112 (see FIG. 11) electrically connected to the electrode assembly and protruding from at least one side of the case 111 (see FIG. 11). In the electrode assembly, a cathode plate and an anode plate may have wide surfaces facing each other and stacked while having a separator interposed therebetween. The separator may prevent an electrical short-circuit from occurring between the cathode plate and the anode plate and allow an ion flow. For example, the separator may include a porous polymer film or a porous nonwoven fabric. According to some embodiments, the electrode assembly may be formed by alternately and repeatedly stacking the cathode plates, the anode plates, and the separators in the order described above. In addition, in some embodiments, the electrode assembly may be implemented as a winding type, a stacking type, a zigzag folding (z-folding) type, or a stack-folding type.

For example, the cell assembly 10 may further include a thermal blocking member 120 disposed between the plurality of battery cells 110 to block heat occurring between adjacent battery cells 110. A plurality of thermal blocking members 120 may be used, and each thermal blocking member may be positioned between two consecutive battery cells. Each of the thermal blocking members 120 may include a material having low thermal conductivity, such as mica, to prevent or reduce heat transfer between neighboring battery cells 110. However, the scope of the present disclosure is not limited to whether the thermal blocking member 120 is provided, and only the plurality of battery cells 110 are also contemplated
The housing 20 may have the accommodation space S configured to accommodate the cell assembly 10 therein. For example, the housing 20 may include a lower cover 22 disposed to support a lower portion of the cell assembly 10, and an upper cover 21 disposed to face the lower cover 22 and to cover the cell assembly 10. The upper cover 21 and the lower cover 22 may be coupled to each other to form the accommodation space S in which the cell assembly 10 is accommodated. In the drawings, the upper cover 21 and the lower cover 22 are illustrated as having a shape similar to a bent bracket-like shape ("[" shape] to surround at least a portion of a side of the cell assembly 10, however the scope of the present disclosure is not limited thereto.

For example, the housing 20 may include a terminal hole 27 into which a high-voltage (HV) terminal 70, electrically connected to a terminal portion 37 of a busbar assembly 30, is inserted. In the drawings, the terminal hole 27 is illustrated as being formed in the upper cover 21, which is merely an illustration, and the terminal hole 27 may be disposed on a lower surface or a side surface of the housing 20. The HV terminal 70 may be coupled to the battery apparatus 1a through the terminal hole 27. The HV terminal 70 may be formed of a conductive material capable of electrically connecting the battery apparatus 1a to an external power source.

For example, the housing 20 may include a valve hole 24 to which a control valve 64 is coupled. When an event such as an excessive increase in pressure inside the accommodation space occurs, the control valve 64 may be opened to allow an exterior of the housing 20 to communicate with the accommodation space. For example, the control valve 64 may be a relief valve for adjusting pressure inside the accommodation space.

The cooling port 65 may allow a cooling fluid to flow into the accommodation space S. For example, the housing 20 may include a port hole 25 to which the cooling port 65 is connected, thereby communicating with the cooling port 65. The cooling port 65 may communicate with an external flow path (e.g., a hose) to allow the cooling fluid to flow in from the external flow path and to allow the cooling fluid to flow out to the external flow path. In this case, the cooling fluid may exchange heat with the plurality of battery cells 110 in the accommodation space S.

The cooling fluid may be located in the accommodation space S, thus the battery apparatus 1a may include the cooling fluid. That is, the battery apparatus 1a may have an immersion cooling structure. The cooling fluid may correspond to a fluid serving as an electrical insulator, for example, insulating oil mainly containing non-conductive oil, but is not limited thereto. The cooling fluid may include any fluid having properties capable of cooling the battery cells 110 through heat exchange with the battery cells 110.

The plurality of cell monitoring units 40 may be disposed in the accommodation space S to monitor (to perform real-time sensing of) the plurality of battery cells 110, respectively. Accordingly, each of the plurality of cell monitoring units 40 may generate a monitoring value for a corresponding battery cell among the plurality of battery cells 110. The plurality of cell monitoring units 40 may operate independently of each other (e.g., generating the monitoring values). A battery management system (BMS) may perform a battery management operation based on the monitoring values. Safety, lifespan, and/or energy efficiency of the battery apparatus 1a may be improved based on the battery management operation.

As the number of the plurality of cell monitoring units 40 increases, the number of battery cells 110 corresponding to one cell monitoring unit 40 may decrease. As the number of battery cells 110 corresponding to one cell monitoring unit 40 decreases, a structure of each of the plurality of cell monitoring units 40 may be advantageously simplified (e.g., a reduced wire length, easier omission of a printed circuit board, or a reduced size of a cell monitoring unit). As the structure of each of the plurality of cell monitoring units 40 is simplified, flowability and/or heat exchange efficiency of the cooling fluid in the accommodation space S may be improved. As the flowability and/or the heat exchange efficiency of the cooling fluid in the accommodation space S are improved, the safety, lifespan, and/or energy efficiency of the battery apparatus 1a may be improved.

The antenna (ANT) may be disposed outside the accommodation space S and perform wireless communication with the plurality of cell monitoring units 40. In this configuration, each of the plurality of cell monitoring units 40 may transmit a generated monitoring value to an exterior of the accommodation space S. This allows the signal transmission structure within the accommodation space S to be simplified. As the structure for transmitting the monitoring value to the exterior of the accommodation space S is simplified, the flowability and/or heat exchange efficiency of the cooling fluid in the accommodation space S may be improved. As the flowability and/or the heat exchange efficiency of the cooling fluid in the accommodation space S are improved, the safety, lifespan, and/or energy efficiency of the battery apparatus 1a may be improved.

For example, the plurality of cell monitoring units 40 may be disposed on (e.g., in direct contact with) the plurality of battery cells 110 (see FIG. 2) to be positioned between the cell assembly 10 and the antenna (ANT). In the illustrated embodiment of FIG. 2, the number of the cell monitoring units 40 corresponds to the number of battery cells 110 in a one-to-one correspondence, and each cell monitoring unit 40 is positioned on the side of corresponding one of the battery cells 110 that is adjacent to the upper cover 21 of the housing 20. The plurality of the cell monitoring units are positioned along a substantially straight line that is parallel to a first direction X which is the direction of stacking the battery cells 110 inside the accommodation space S. The housing 20 may include a non-conductive wireless communication region 20a positioned between the plurality of cell monitoring units 40 and the antenna (ANT). The wireless communication region 20a may be positioned directly above the plurality of the cell monitoring units as illustrated in FIG.2. However, this configuration as shown in FIG. 2 is just one embodiment, and other configurations are also contemplated. Accordingly, the plurality of cell monitoring units 40 may transmit the generated monitoring values to outside the accommodation space S through the wireless communication region 20a. Due to the non-conductivity of the wireless communication region 20a, wireless communication performance (e.g., energy efficiency) between the plurality of cell monitoring units 40 and the antenna (ANT) may be improved. In some embodiments, the wireless communication region 20a may substantially reduce electromagnetic shielding effects caused by the conductive portion of the housing. The non-conductive material associated with the wireless communication region 20a may comprise, for example, at least one of plastic, glass, ceramic, or a composite thereof, but is not limited thereto.

For example, the antenna (ANT) may be formed of a conductive material. A current flowing through the antenna (ANT) in an extension direction of the antenna (ANT) (e.g., the X-direction) may form magnetic flux in a direction surrounding the antenna (ANT), and may magnetically couple with each of the plurality of cell monitoring units 40. According to such magnetic coupling, the plurality of cell monitoring units 40 may transmit the generated monitoring values to the antenna (ANT) even without direct contact with the antenna (ANT).

Depending on a design, each of the plurality of cell monitoring units 40 may transmit the generated monitoring value to the antenna (ANT) based on a resonance scheme. For example, the antenna (ANT) and a surrounding structure of the antenna (ANT) may have an equivalent inductance and an equivalent capacitance, and may have a resonance frequency based on the equivalent inductance and the equivalent capacitance. The resonance frequency of the antenna (ANT) may be substantially identical (or proximate) to a resonance frequency of an equivalent circuit included in a portion of each of the plurality of cell monitoring units 40. According to such identity/proximity between the resonance frequencies, the plurality of cell monitoring units 40 may transmit the generated monitoring values to the antenna (ANT) even without direct contact with the antenna (ANT).

The housing 20 may further include a conductive covering region 20b surrounding the wireless communication region 20a. For example, the covering region 20b may include a material having predetermined rigidity such as a metal (e.g., aluminum and/or stainless steel). For example, the covering region 20b may correspond to a remainder of the housing 20 excluding the wireless communication region 20a and an antenna support member 20c, or may correspond to a portion of the remainder (e.g., the upper cover 21 or an upper surface of the upper cover 21).

Due to the conductivity of the covering region 20b, the covering region 20b may shield noise signals with respect to wireless communication between the plurality of cell monitoring units 40 and the antenna (ANT). In addition, the covering region 20b may form a magnetic (or electromagnetic) boundary condition of the wireless communication, thereby further improving wireless communication performance (e.g., energy efficiency).

As the antenna (ANT) is disposed closer to the plurality of cell monitoring units 40, energy loss occurring during a wireless communication process between the plurality of cell monitoring units 40 and the antenna (ANT) may be reduced. Accordingly, the antenna (ANT) may be disposed close to the housing 20.

For example, at least a portion of the antenna (ANT) may be slightly spaced apart from the housing 20 while ensuring an insulation distance from the housing 20. For example, the housing 20 may include the antenna support member 20c, and the antenna support member 20c may be formed of a non-conductive material and may be in direct contact with the antenna (ANT) to support the antenna (ANT). Based on the support by the antenna support member 20c, a position of the antenna (ANT) (a relative position thereof with respect to the plurality of cell monitoring units 40) may be fixed.

FIG. 1A illustrates that the antenna support member 20c is in direct contact with only one point of the antenna (ANT). However, depending on a design, the antenna support member 20c may be in direct contact with all or most of the antenna (ANT) (e.g., extending along the antenna (ANT)), or the antenna (ANT) may not be spaced apart from the housing 20. For example, the antenna (ANT) may be integrated with the housing 20, or may be assembled to the housing 20 through the antenna support member 20c.

The antenna (ANT) may transmit the monitoring values received from the plurality of cell monitoring units 40 to a battery management controller (CNTL).

Referring to FIG. 1A, the battery management controller (CNTL) may be electrically connected to the antenna (ANT) through a connector (CT), and may perform wired communication with the antenna (ANT).

Referring to FIG. 1B, the battery management controller (CNTL) may be spaced apart from the antenna (ANT), and may perform wireless communication with the antenna (ANT). For example, the antenna (ANT) may be magnetically coupled with the battery management controller (CNTL) to perform short-range wireless communication, or may perform long-range wireless communication with the battery management controller (CNTL) according to the resonance scheme (or an electromagnetic radiation scheme).

Referring to FIGS. 1C and 2, each of the battery apparatuses 1 and 1c according to the embodiments of the present disclosure may include the cell assembly 10, the housing 20, the cooling port 65, and the plurality of cell monitoring units 40. The housing 20 may include the wireless communication region 20a formed of a non-conductive material, and the covering region 20b surrounding the wireless communication region 20a and formed of a material (e.g., conductive) different from the material (e.g., non-conductive) of the wireless communication region 20a. Each of the plurality of cell monitoring units 40 (see FIG. 2) may be disposed between the plurality of battery cells 110 (see FIG. 2) and the wireless communication region 20a. Accordingly, the plurality of cell monitoring units 40 (see FIG. 2) may transmit the generated monitoring values to an exterior of the accommodation space S through the wireless communication region 20a, thereby simplifying the structure for transmitting the monitoring values to an exterior of the accommodation space S.

That is, depending on a design, the battery apparatus 1c may not include the antenna (ANT) in FIG. 1A. For example, the plurality of cell monitoring units 40 (see FIG. 2) may perform wireless communication with an antenna of a load (e.g., an electric vehicle or mobility) of the battery apparatus 1c.

Referring to FIG. 1D, the battery apparatus 1d according to an embodiment of the present disclosure may not include the wireless communication region 20a in FIG. 1A. For example, the housing 20 may be formed of a rigid non-conductive material, or the upper cover 21 of the housing 20 may be formed of a rigid non-conductive material.

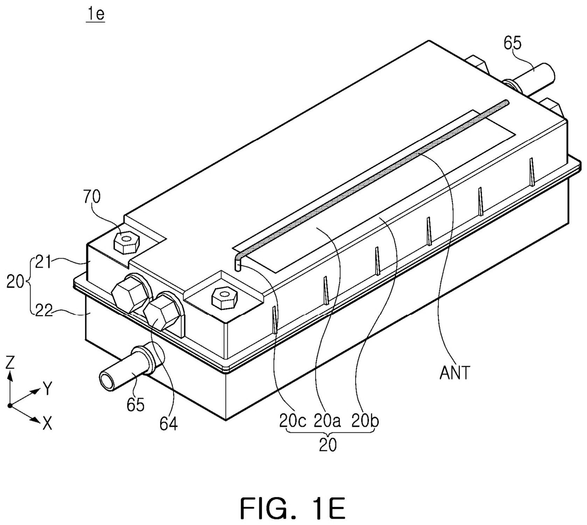

Referring to FIG. 1E, the antenna (ANT) and/or the wireless communication region 20a of the battery apparatus 1e according to an embodiment of the present disclosure may extend in a direction (e.g., a Y-direction) different from the extension direction (e.g., the X-direction) of the antenna (ANT) and/or the wireless communication region 20a of the battery apparatus 1a in FIG. 1A. Here, unlike the plurality of cell monitoring units 40 in FIG. 2, the plurality of cell monitoring units and/or the plurality of battery cells in the battery apparatus 1e may also be arranged in the Y-direction.

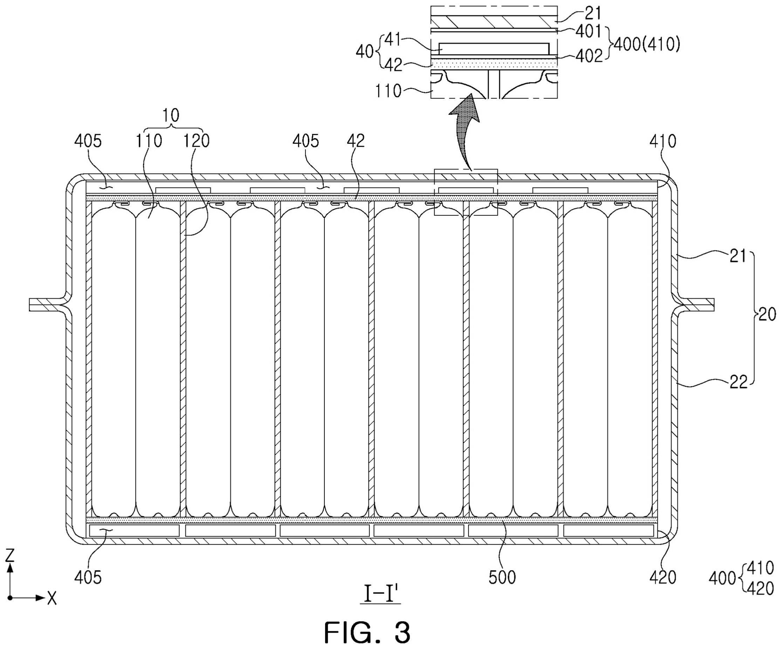

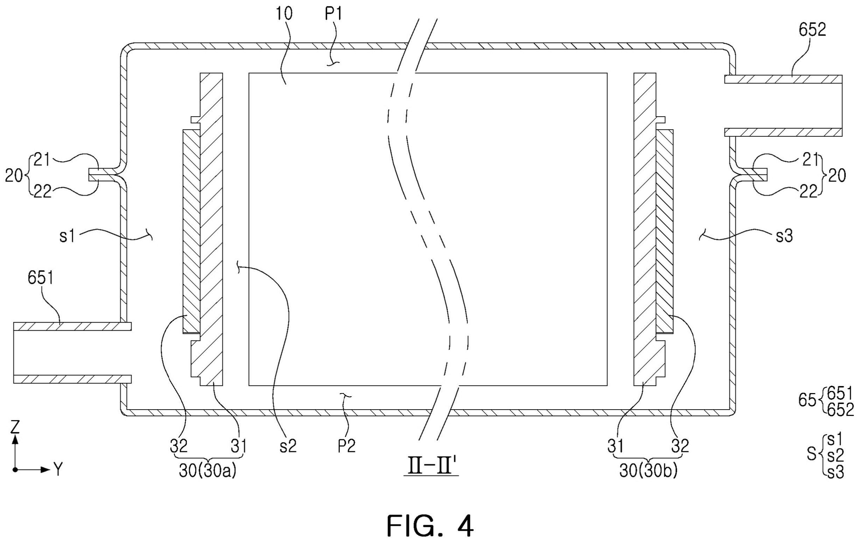

Referring to FIGS. 1A, 2, 3, and 4, the plurality of cell monitoring units 40 may be arranged in an arrangement direction (e.g., the X-direction) of the plurality of battery cells 110, and the antenna (ANT) (see FIG. 1A) and/or the wireless communication region 20a may extend in the arrangement direction (e.g., the X-direction) of the plurality of cell monitoring units 40. Accordingly, an average distance between the plurality of cell monitoring units 40 and the plurality of battery cells 110 may be reduced, and thus the structure of each of the plurality of cell monitoring units 40 may be advantageously simplified (e.g., the reduced wire length, easier omission of the printed circuit board, or the reduced size of the cell monitoring unit).

For example, the cooling port 65 may include an inlet cooling port 651 disposed on one side of the housing 20 (e.g., in a negative Y-direction) and allowing the cooling fluid to flow into the accommodation space S, and an outlet cooling port 652 disposed on the other side of the housing 20 (e.g., in a positive Y-direction) and allowing the cooling fluid to flow out from the accommodation space S. Accordingly, flowability of the cooling fluid may be improved, and a contact time and a contact area between the cooling fluid and the battery cells 110 may be increased.

For example, the inlet cooling port 651 may be disposed in the lower cover 22 of the housing 20, the outlet cooling port 652 may be disposed on the upper cover 21 of the housing 20, however the scope of the present disclosure is not limited thereto. For example, the inlet cooling port 651 and the outlet cooling port 652 may be disposed only on the upper cover 21 or only on the lower cover 22 to allow the inlet cooling port 651 and the outlet cooling port 652 to be disposed to face each other while having the cell assembly 10 interposed therebetween.

For example, the direction (e.g., the Y-direction) in which the inlet cooling port 651 and the outlet cooling port 652 face each other and the arrangement direction (e.g., the X-direction) of the plurality of cell monitoring units 40 may not be parallel to each other. The arrangement direction (e.g., the X-direction) of the plurality of cell monitoring units 40 and the arrangement direction (e.g., the X-direction) of the plurality of battery cells 110 may be parallel to each other, and the plurality of battery cells 110 may extend in a direction (e.g., the Y-direction) perpendicular to the arrangement direction (e.g., the X-direction). The cooling fluid may flow in the direction (e.g., the Y-direction) in which the inlet cooling port 651 and the outlet cooling port 652 face each other, and may thus flow in the extension direction (e.g., the Y-direction) of the plurality of battery cells 110 and increase the contact time and the contact area between the cooling fluid and the plurality of battery cells 110.

Referring to FIGS. 1A, 2, 3, and 4, each of the battery apparatuses 1 and 1a according to the embodiments of the present disclosure may further include the busbar assembly 30 and/or a support cover 50. The busbar assembly 30 may include a plurality of busbars 32, a busbar frame 31 for supporting the plurality of busbars 32, and the terminal portion 37 connected to at least one of the plurality of busbars 32.

The busbar assembly 30 may include a pair of busbar assemblies 30a and 30b disposed while having the cell assembly 10 interposed therebetween. The busbar assembly 30 may be electrically connected to the plurality of battery cells 110. The busbar assembly 30 may be disposed to face the cell assembly 10 and may be disposed between the cell assembly 10 and the cooling port 65.

The busbar 32 may be formed of a conductive material and may electrically connect the plurality of battery cells 110 to each other. The busbar 32 may be electrically connected to the battery cell 110 while being fixed to the busbar frame 31. The busbar frame 31 may be formed of an electrically insulating material to prevent a short-circuit occurring between adjacent busbars 32 and to support the busbar 32. The terminal portion 37 may be connected to at least one of the plurality of busbars 32 to provide a path electrically connected to an external power source of the battery apparatus.

A cooling fluid introduced into a first accommodation space s1 may flow into a second accommodation space s2 through a frame hole formed in the busbar frame 31. A cooling fluid disposed in the first accommodation space s1 and/or the second accommodation space s2 may flow into a third accommodation space s3 through a first path P1 and a second path P2. The cooling fluid in the third accommodation space s3 may be discharged to an exterior of the accommodation space S through the outlet cooling port 652outlet cooling port 652.

The support cover 50 may be disposed between the cell assembly 10 and the cooling port 65. The support cover 50 may be disposed to face the cell assembly 10 while having the busbar assembly 30 interposed therebetween, and may include an electrically insulating material to prevent a short-circuit occurring between the busbar assembly 30 and the housing 20. For example, the support cover 50 may include a plurality of flow path holes through which the cooling fluid passes.

The cell assembly 10 may be disposed to allow at least a portion of the cooling fluid to flow, in the accommodation space S, through a space between the plurality of cell monitoring units 40 and the wireless communication region 20a (and/or the antenna (ANT)). For example, a thickness of each of the plurality of cell monitoring units 40 (e.g., a dimension in a Z-direction) may be smaller than a distance between the plurality of battery cells 110 and the upper cover 21 (e.g., a separation distance in the Z-direction), and the plurality of cell monitoring units 40 may be spaced apart from the upper cover 21, and are not limited thereto.

Accordingly, the contact time and the contact area between the cooling fluid and the plurality of cell monitoring units 40 may be increased, thus the cooling fluid may effectively cool not only the plurality of battery cells 110 but also the plurality of cell monitoring units 40. Heat may occur in the plurality of cell monitoring units 40 during a monitoring process and/or a wireless communication process, and the cooling fluid may discharge heat occurring in the plurality of cell monitoring units 40 to an exterior of the accommodation space S.

For example, each of the battery apparatuses 1 and 1a may include a cell support 400 for supporting the cell assembly 10 and the housing 20 to form a gap between the cell assembly 10 and the housing 20. The cell support 400 may include a first cell support 410 for supporting the cell assembly 10 and the upper cover 21 to form a gap between the cell assembly 10 and the upper cover 21, and a second cell support 420 for supporting the cell assembly 10 and the lower cover 22 to form a gap between the cell assembly 10 and the lower cover 22.

Each of the first and second cell supports 410 and 420 may be implemented as a flow path plate through which the cooling fluid flows. For example, the first and second cell supports 410 and 420 may surround the first and second paths 405, respectively, to form the first and second paths 405 through which the cooling fluid flows. For example, the cell support 400 may include an upper support 401 adjacent to the housing 20 and supporting the housing 20, and a lower support 402 adjacent to the cell assembly 10 and supporting the cell assembly 10.

For example, each of the battery apparatuses 1 and 1a may further include a heat transfer member 500 disposed between the cell assembly 10 and the cell support 400. For example, the heat transfer member 500 may include a material having high thermal conductivity to facilitate heat exchange between the cell support 400 and the battery cells 110. For example, the heat transfer member 500 may include an adhesive adhering to the cell support 400 and/or the battery cells 110.

Each of the plurality of cell monitoring units 40 may monitor (by performing continuous sensing of) at least one of a voltage, an internal resistance, a current, a temperature of a corresponding battery cell, or any combination thereof among the plurality of battery cells 110. For example, each of the plurality of cell monitoring units 40 may operate as a voltage sensor electrically connected between at least two lead tabs 112 (see FIG. 11) of each of the plurality of battery cells 110 to perform continuous sensing of a voltage. For example, each of the plurality of cell monitoring units 40 may operate as a current sensor electrically connected to the cell assembly 10 to perform continuous sensing of a current, or may perform continuous sensing of an internal resistance of each of the plurality of battery cells 110 based on a current and a voltage. For example, each of the plurality of cell monitoring units 40 may include a thermistor, which is a temperature sensor disposed on each of the plurality of battery cells 110, and may perform continuous sensing of a temperature of each of the plurality of battery cells 110 by performing continuous sensing of a voltage/resistance of the thermistor.

Each of the plurality of cell monitoring units 40 may include a semiconductor integrated circuit 41 electrically connected between at least two lead tabs of a corresponding battery cell among the plurality of battery cells 110. The semiconductor integrated circuit 41 may be implemented as at least one of a semiconductor chipset, a semiconductor die, and/or a semiconductor package.

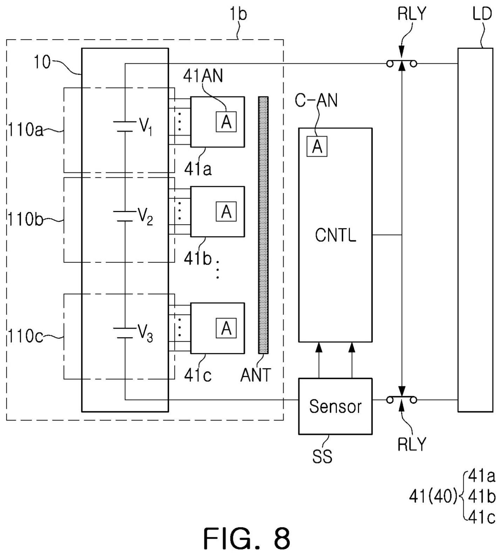

For example, the semiconductor integrated circuit 41 may include a sensor circuit implemented as the voltage sensor, the current sensor, and/or the temperature sensor, and the sensor circuit may generate the monitoring value. For example, the semiconductor integrated circuit 41 may include a communication circuit for converting the monitoring value generated by the sensor circuit into a wireless communication signal. For example, the semiconductor integrated circuit 41 may include a cell antenna 41AN (see FIG. 8) for transmitting a wireless communication signal output from the communication circuit to an exterior of the accommodation space S and/or to the antenna (ANT) (see FIG. 1A).

For example, at least one of the plurality of cell monitoring units 40 may further include a printed circuit board 42 electrically connected between at least two lead tabs of a corresponding battery cell among the plurality of battery cells 110. The semiconductor integrated circuit 41 of at least one of the plurality of cell monitoring units 40 may be disposed on the printed circuit board 42 and may be electrically connected, through the printed circuit board 42, between at least two lead tabs of the corresponding battery cell among the plurality of battery cells 110.

For example, the semiconductor integrated circuit 41 may be mounted on the printed circuit board 42 through soldering between terminals of the semiconductor integrated circuit 41 (e.g., pins, connectors, and/or redistribution layers (RDL)) and the printed circuit board 42. For example, the printed circuit board 42 may be implemented as a flexible printed circuit board, and is not limited thereto.

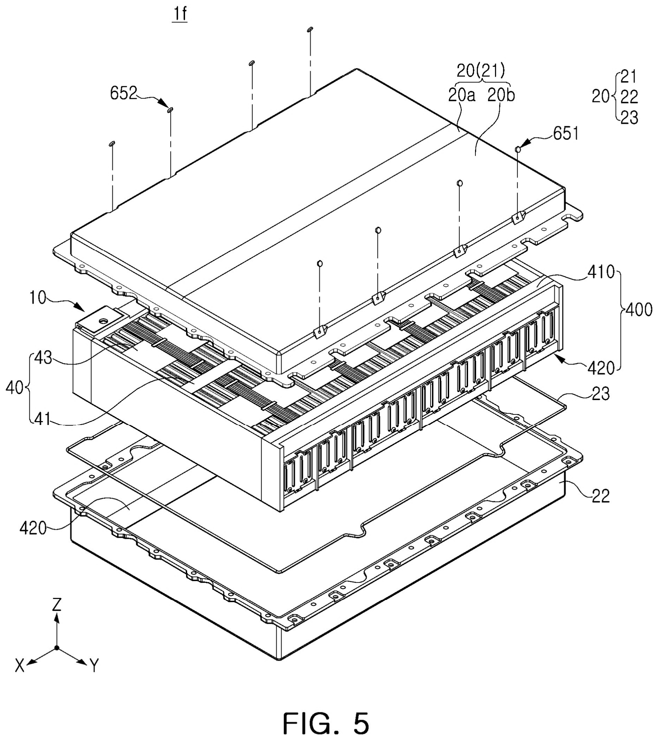

Referring to FIGS. 5, 6, and 7, the cell assembly 10 of the battery apparatus 1f according to an embodiment of the present disclosure may include more battery cells 110 than the cell assemblies of the battery apparatuses of FIGS. 1A, 1B, 1C, 1D, 1E, and 2, and may be elongated in the arrangement direction (e.g., the X-direction) of the battery cells 110.

For example, the battery apparatus 1f may be implemented as a wide battery module or may be implemented as a battery pack (an arrangement of a plurality of battery modules), but is not limited thereto. Depending on a design, the housing 20 may further include a sealing gasket 23 for sealing a coupling portion between the upper cover 21 and the lower cover 22.

The number of inlet cooling ports 651 included in the cooling ports (e.g., four inlet cooling ports 651 in FIG. 5) and the number of outlet cooling ports 652 (e.g., four outlet cooling ports 652 in FIG. 5) may increase as the number of battery cells 110 included in the cell assembly 10 increases.

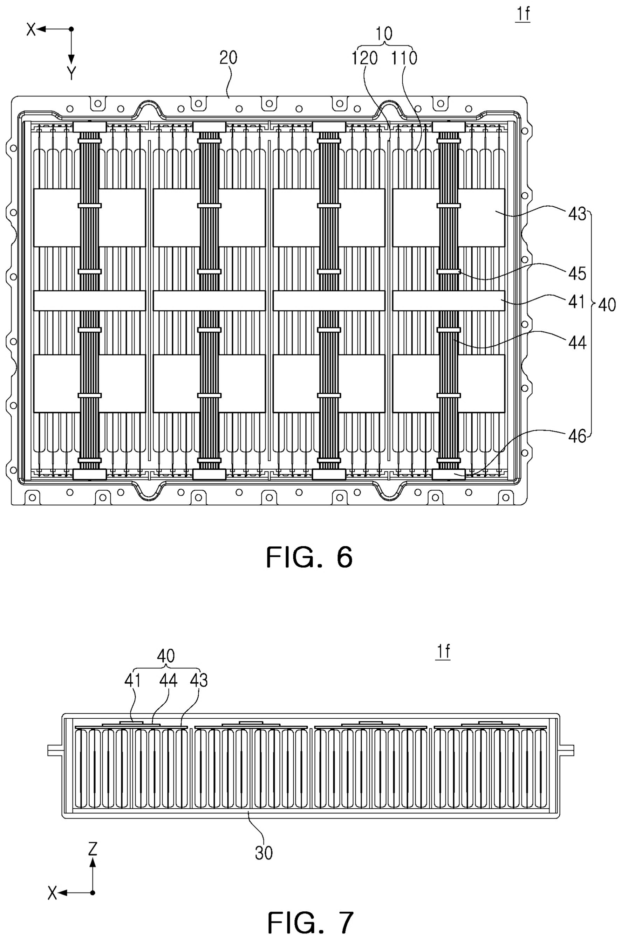

The number of the plurality of cell monitoring units 40 (e.g., four cell monitoring units 40 in FIG. 5) may be less than the number of the plurality of battery cells 110. The semiconductor integrated circuit 41 of at least one of the plurality of cell monitoring units 40 may be electrically connected to at least two battery cells (e.g., eight to nine battery cells in FIG. 6) included in a portion of the plurality of battery cells 110 (e.g., one quarter of the entirety in FIG. 6).

For example, at least two battery cells (e.g., eight to nine battery cells in FIG. 6) electrically connected to one cell monitoring unit may be connected to each other in parallel, but are not limited thereto.

For example, each of the plurality of cell monitoring units 40 may include a connector 46 electrically connected to at least two lead tabs 112 (see FIG. 11) of each of at least two corresponding battery cells (e.g., eight to nine battery cells in FIG. 6), and may include a wire 44 electrically connecting the connector 46 to the semiconductor integrated circuit 41. Accordingly, each of the plurality of cell monitoring units 40 may monitor an electrical monitoring value (e.g., voltage, internal resistance, or current).

For example, as illustrated in FIG. 6, each of the plurality of cell monitoring units 40 may include an adhesive portion 45 for adhering the wire 44 to the cell assembly 10. For example, each of the plurality of cell monitoring units 40 may include a sensor 43 for monitoring a second monitoring value (e.g., temperature, gas, or pressure) of at least two corresponding battery cells (e.g., eight to nine battery cells in FIG. 6). The semiconductor integrated circuit 41 may obtain the monitoring value from the sensor 43.

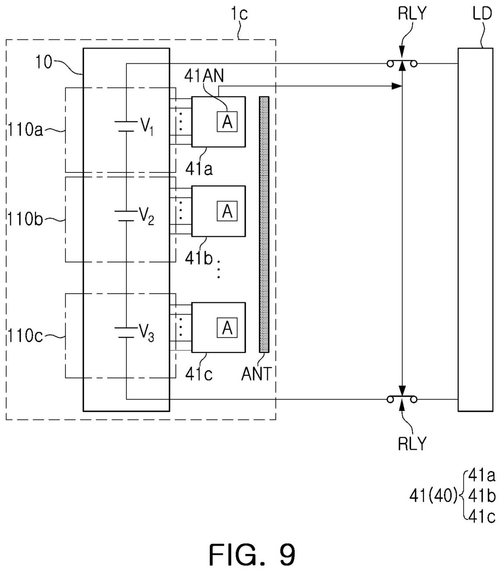

Referring to FIGS. 8 and 9, a plurality of semiconductor integrated circuits 41a, 41b, and 41c of the plurality of cell monitoring units 40 may correspond one-to-one to a plurality of battery cells 110a, 110b, and 110c to monitor the plurality of battery cells 110a, 110b, and 110c, respectively, and may generate a plurality of monitoring values (e.g., voltages V1, V2, and V3).

For example, each of the plurality of cell monitoring units 40 may convert a monitoring value for a corresponding battery cell among the plurality of battery cells 110 into a wireless communication signal and transmit the wireless communication signal to an exterior of the accommodation space S (see FIG. 2) and/or to the antenna (ANT).

For example, each of the plurality of cell monitoring units 40 may include the cell antenna 41AN for transmitting a wireless communication signal. For example, the cell antenna 41AN may be implemented as a coil or an electromagnetic coupler, but is not limited thereto. For example, each of the plurality of semiconductor integrated circuits 41a, 41b, and 41c may generate a wireless communication signal having a frequency according to a standard communication specification.

Referring to FIGS. 1A, 1B, and 8, each of the battery apparatuses 1a and 1b according to embodiments of the present disclosure may further include the battery management controller (CNTL) for receiving the monitoring value from each of the plurality of cell monitoring units 40 through the antenna (ANT) and performing the predetermined battery management operation.

For example, the battery management controller (CNTL) may be implemented as a computing device including a processor, a memory, a communication device (e.g., a controller area network (CAN)), and an input/output device, but is not limited thereto. For example, the communication device (CAN) may be implemented as a controller antenna, such as a coil or an electromagnetic coupler, but is not limited thereto. For example, the battery management controller (CNTL) may receive not only the monitoring values from the plurality of cell monitoring units 40 but also a monitoring values from an additional sensor SS.

A predetermined battery management operation may be set based on a battery monitoring system (BMS). For example, based on the predetermined battery management operation, the battery management controller (CNTL) may determine, in real time, whether the plurality of battery cells 110a, 110b, and 110c are abnormal based on the monitoring values obtained from the plurality of cell monitoring units 40, and, when the plurality of battery cells 110a, 110b, and 110c are abnormal, may control a relay (RLY) to an off state, thereby cutting off an electrical connection between the plurality of battery cells 110a, 110b, and 110c and a load (LD) (e.g., an electric vehicle, a motor, or an inverter). Accordingly, safety and/or lifespan of the cell assembly 10 may be improved.

For example, based on the predetermined battery management operation, the battery management controller (CNTL) may generate state of charge (SOC) information and/or state of health (SOH) information of the cell assembly 10 based on the monitoring values obtained from the plurality of cell monitoring units 40, and may transmit the generated information to outside the battery apparatus. Accordingly, outside of the battery apparatus (e.g., an electric vehicle) may further improve charge/discharge efficiency and/or stability of the cell assembly 10, and safety and/or lifespan of the cell assembly 10 may be improved.

Referring to FIG. 9, one semiconductor integrated circuit 41a among the plurality of cell monitoring units 40 may receive, through the antenna (ANT), the monitoring values from the remaining semiconductor integrated circuits 41b and 41c among the plurality of cell monitoring units 40. That is, depending on a design, one of the plurality of cell monitoring units 40 may perform an operation similar to an operation of the battery management controller (CNTL) in FIG. 8 (e.g., relay (RLY) control), may be disposed in the accommodation space S (see FIG. 2) of the housing, and may transmit the wireless communication signal (e.g., a relay (RLY) control signal) to an exterior of the accommodation space S (see FIG. 2).

For example, the plurality of cell monitoring units 40 may receivemonitoring values from adjacent cell monitoring units through the antenna (ANT) based on a daisy chain scheme. The antenna (ANT) may be used as a first communication path between the plurality of cell monitoring units 40 and the battery management controller, and/or as a second communication path among the plurality of cell monitoring units 40.

Referring to FIGS. 10 and 11, each of the plurality of battery cells 110 may include the case 111 and at least two lead tabs 112 protruding from opposite sides (one left side and the other right side) of the case 111, respectively. Each of the plurality of cell monitoring units 40 may be disposed in a corner region 111c of one surface of the case 111 of a corresponding battery cell among the plurality of battery cells 110, one surface facing an adjacent battery cell, and may be electrically connected to at least two lead tabs 112 through one surface. The cell monitoring unit 40 as shown in FIG.11 may be mounted on one planar surface of the case 111 in the corner region 111c of that surface and face an adjacent battery cell 110.

For example, each of the plurality of cell monitoring units 40 may be disposed on one surface of the plurality of battery cells 110 and may include a wire 47, and may be electrically connected to at least two lead tabs 112 through the wire 47. At least a portion of the antenna (ANT) may be disposed adjacent to the corner region 111c in the cell assembly 10.

Based on at least pouch-type battery cells, a thickness at the corner region 111c of each of the plurality of battery cells 110 may be thinner than a thickness at remaining regions of each of the plurality of battery cells 110. Accordingly, the cell assembly 10 may form a gap space overlapping the corner region 111c, and the plurality of semiconductor integrated circuits 41 of the plurality of cell monitoring units 40 may be disposed in the gap space. Accordingly, the plurality of cell monitoring units 40 may be disposed closer to the cell assembly 10, and a size relative to a capacity of the battery apparatus may be efficiently increased.

The case 111 may accommodate the electrode assembly and the electrolyte and may form an exterior of the battery cell 110. In the drawings, the case 111 is illustrated as a pouch-type battery cell accommodating the electrode assembly in an inner space of a pouch and sealing the inner space by fusion-bonding at least one side edge, but is not limited thereto.

In an embodiment of the present disclosure, the lead tab 112 may be disposed on at least one side of the battery cell 110 and may be electrically connected to the busbar assembly 30 (see FIG. 2). For example, the lead tabs 112 may be disposed on both sides in a length direction (the Y-axis direction) of the battery cell 110. In this case, a positive electrode tab having a positive polarity may be disposed on one of both the sides, and a negative electrode tab having a negative polarity may be disposed on the other side. However, the battery cell 110 according to the present disclosure is not limited to the above-described arrangement structure of the lead tabs 112. For example, the above-described positive electrode tab and negative electrode tab of the lead tabs 112 may both be disposed on one side in the length direction (the Y-axis direction) of the battery cell 110.

As set forth above, the battery apparatus according to an embodiment of the present disclosure may simplify the structure for transmitting the monitoring information of the battery apparatus and/or the structure for monitoring the battery apparatus, e.g., the reduced wire length, the easier omission of the printed circuit board, or the reduced size of the cell monitoring unit, while ensuring effective cooling performance by the cooling fluid.

As the structure for transmitting the monitoring values to an exterior of the accommodation space is simplified, the flowability and/or heat exchange efficiency of the cooling fluid in the accommodation space may be improved. As the flowability and/or the heat exchange efficiency of the cooling fluid in the accommodation space are improved, the safety, lifespan, and/or energy efficiency of the battery apparatus may be improved.

Only specific configurations of certain embodiments are described. Variations, improvements and enhancements to the disclosed embodiments and other embodiments may be made based on the present disclosure. Furthermore, the embodiments may be combined to form additional embodiments.

The present disclosure also relates to the following aspects.

Aspect 1) A battery apparatus comprising: a cell assembly including a plurality of battery cells, a housing having an accommodation space accommodating the cell assembly therein, a cooling port allowing a cooling fluid to flow into the accommodation space, a plurality of cell monitoring units disposed in the accommodation space to monitor the plurality of battery cells, respectively, and an antenna disposed outside the accommodation space and performing wireless communication with the plurality of cell monitoring units.

Aspect 2) In aspect 1, wherein the plurality of cell monitoring units are disposed on the plurality of battery cells and positioned between the cell assembly and the antenna, and wherein the housing includes a non-conductive wireless communication region positioned between the plurality of cell monitoring units and the antenna, wherein the housing optionally further includes a conductive covering region surrounding the wireless communication region, and wherein the antenna optionally extends in an arrangement direction of the plurality of cell monitoring units.

Aspect 3) In aspect 1 or 2, wherein the cooling port includes an inlet cooling port disposed on one side of the housing and allowing the cooling fluid to flow into the accommodation space, and an outlet cooling port disposed on the other side of the housing and allowing the cooling fluid to flow out from the accommodation space, wherein, optionally, a direction in which the inlet cooling port and the outlet cooling port face each other and an arrangement direction of the plurality of cell monitoring units are not parallel to each other, and wherein the cell assembly is optionally disposed to allow at least a portion of the cooling fluid to flow, in the accommodation space, through a space between the plurality of cell monitoring units and the antenna.

Aspect 4) In any one of aspect 1 to 3, further including a battery management controller for receiving a monitoring value from each of the plurality of cell monitoring units through the antenna and performing a predetermined battery management operation.

Aspect 5) In any one of aspect 1 to 4, wherein one of the plurality of cell monitoring units receives, through the antenna, monitoring values from the remaining ones of the plurality of cell monitoring units.

Aspect 6) In any one of aspect 1 to 5, wherein each of the plurality of cell monitoring units monitors at least one of a voltage, an internal resistance, a current, a temperature of a corresponding battery cell, or a combination thereof among the plurality of battery cells, and wherein each of the plurality of cell monitoring units includes a semiconductor integrated circuit electrically connected between at least two lead tabs of the corresponding battery cell among the plurality of battery cells.

Aspect 7) In aspect 6, wherein at least one of the plurality of cell monitoring units further includes a printed circuit board electrically connected between the at least two lead tabs of the corresponding battery cell among the plurality of battery cells, and wherein the semiconductor integrated circuit of the at least one of the plurality of cell monitoring units is disposed on the printed circuit board and is electrically connected, through the printed circuit board, between the at least two lead tabs of the corresponding battery cell among the plurality of battery cells.

Aspect 8) In any one of aspect 6, wherein the number of the plurality of cell monitoring units is less than the number of the plurality of battery cells, and wherein the semiconductor integrated circuit of at least one of the plurality of cell monitoring units is electrically connected to at least two battery cells included in a portion of the plurality of battery cells.

Aspect 9) In any one of aspect 1 to 8, wherein each of the plurality of battery cells includes a case and at least two lead tabs protruding from opposite sides of the case, respectively, and wherein each of the plurality of cell monitoring units is disposed in a corner region of one surface of the case of a corresponding battery cell among the plurality of battery cells, the one surface facing an adjacent battery cell, and is electrically connected to the at least two lead tabs through the one surface, wherein the plurality of cell monitoring units optionally correspond one-to-one to the plurality of battery cells to monitor the plurality of battery cells, respectively.

Aspect 10) In aspect 1, wherein each of the plurality of cell monitoring units converts a monitoring value for a corresponding battery cell among the plurality of battery cells into a wireless communication signal and transmits the wireless communication signal to the antenna.

Aspect 11) A battery apparatus comprising: a cell assembly including a plurality of battery cells, a housing having an accommodation space accommodating the cell assembly therein, a cooling port allowing a cooling fluid to flow into the accommodation space, and a plurality of cell monitoring units disposed in the accommodation space to monitor the plurality of battery cells, respectively, wherein the housing includes a wireless communication region formed of a non-conductive material and a covering region surrounding the wireless communication region and formed of a material different from the material included in the wireless communication region, and wherein each of the plurality of cell monitoring units is disposed between the plurality of battery cells and the wireless communication region.

Aspect 12) In aspect 11, wherein the cooling port includes an inlet cooling port disposed on one side of the housing and allowing the cooling fluid to flow into the accommodation space, and an outlet cooling port disposed on the other side of the housing and allowing the cooling fluid to flow out from the accommodation space, and the covering region is conductive, wherein, optionally, an arrangement direction of the plurality of cell monitoring units are not parallel to a direction in which the inlet cooling port and the outlet cooling port face each other, and wherein the cell assembly is optionally disposed to allow at least a portion of the cooling fluid to flow, in the accommodation space, through a space between the plurality of cell monitoring units and the wireless communication region.

Aspect 13) In aspect 11 or 12, wherein the plurality of cell monitoring units is arranged in an arrangement direction of the plurality of battery cells, and wherein the wireless communication region extends in an arrangement direction of the plurality of cell monitoring units.

Aspect 14) In any one of aspect 11 to 13, wherein each of the plurality of cell monitoring units converts a monitoring value for each of the plurality of battery cells into a wireless communication signal and transmits the wireless communication signal to outside the accommodation space through the wireless communication region.

Aspect 15) In any one of aspect 11 to 14, wherein each of the plurality of cell monitoring units monitors at least one of a voltage, an internal resistance, a current, a temperature of a corresponding battery cell, or a combination thereof among the plurality of battery cells, and each of the plurality of cell monitoring units includes a semiconductor integrated circuit electrically connected between at least two lead tabs of the corresponding battery cell among the plurality of battery cells.

## Claims

1. . A battery apparatus comprising:
a cell assembly including a plurality of battery cells;
a housing having an accommodation space accommodating the cell assembly therein;
a cooling port allowing a cooling fluid to flow into the accommodation space;
a plurality of cell monitoring units disposed in the accommodation space to monitor the plurality of battery cells, respectively; and
an antenna disposed outside the accommodation space and performing wireless communication with the plurality of cell monitoring units.

2. . The battery apparatus of claim 1, wherein the plurality of cell monitoring units are disposed on the plurality of battery cells and positioned between the cell assembly and the antenna, and
wherein the housing includes a non-conductive wireless communication region positioned between the plurality of cell monitoring units and the antenna,
wherein the housing optionally further includes a conductive covering region surrounding the wireless communication region, and
wherein the antenna optionally extends in an arrangement direction of the plurality of cell monitoring units.

3. . The battery apparatus of claim 1 or 2, wherein the cooling port includes
an inlet cooling port disposed on one side of the housing and allowing the cooling fluid to flow into the accommodation space, and
an outlet cooling port disposed on the other side of the housing and allowing the cooling fluid to flow out from the accommodation space,
wherein, optionally, a direction in which the inlet cooling port and the outlet cooling port face each other and an arrangement direction of the plurality of cell monitoring units are not parallel to each other, and
wherein the cell assembly is optionally disposed to allow at least a portion of the cooling fluid to flow, in the accommodation space, through a space between the plurality of cell monitoring units and the antenna.

4. . The battery apparatus of any one of claims 1 to 3, further including a battery management controller for receiving a monitoring value from each of the plurality of cell monitoring units through the antenna and performing a predetermined battery management operation.

5. . The battery apparatus of any one of claims 1 to 4, wherein one of the plurality of cell monitoring units receives, through the antenna, monitoring values from the remaining ones of the plurality of cell monitoring units.

6. . The battery apparatus of any one of claims 1 to 5, wherein each of the plurality of cell monitoring units monitors at least one of a voltage, an internal resistance, a current, a temperature of a corresponding battery cell, or a combination thereof among the plurality of battery cells, and
wherein each of the plurality of cell monitoring units includes a semiconductor integrated circuit electrically connected between at least two lead tabs of the corresponding battery cell among the plurality of battery cells.

7. . The battery apparatus of claim 6, wherein at least one of the plurality of cell monitoring units further includes a printed circuit board electrically connected between the at least two lead tabs of the corresponding battery cell among the plurality of battery cells, and
wherein the semiconductor integrated circuit of the at least one of the plurality of cell monitoring units is disposed on the printed circuit board and is electrically connected, through the printed circuit board, between the at least two lead tabs of the corresponding battery cell among the plurality of battery cells.

8. . The battery apparatus of claim 6, wherein the number of the plurality of cell monitoring units is less than the number of the plurality of battery cells, and
wherein the semiconductor integrated circuit of at least one of the plurality of cell monitoring units is electrically connected to at least two battery cells included in a portion of the plurality of battery cells.

9. . The battery apparatus of any one of claims 1 to 8, wherein each of the plurality of battery cells includes a case and at least two lead tabs protruding from opposite sides of the case, respectively, and
wherein each of the plurality of cell monitoring units is disposed in a corner region of one surface of the case of a corresponding battery cell among the plurality of battery cells, the one surface facing an adjacent battery cell, and is electrically connected to the at least two lead tabs through the one surface,
wherein the plurality of cell monitoring units optionally corresponds one-to-one to the plurality of battery cells to monitor the plurality of battery cells, respectively.

10. . The battery apparatus of claim 1, wherein each of the plurality of cell monitoring units converts a monitoring value for a corresponding battery cell among the plurality of battery cells into a wireless communication signal and transmits the wireless communication signal to the antenna.

11. . A battery apparatus comprising:
a cell assembly including a plurality of battery cells;
a housing having an accommodation space accommodating the cell assembly therein;
a cooling port allowing a cooling fluid to flow into the accommodation space; and
a plurality of cell monitoring units disposed in the accommodation space to monitor the plurality of battery cells, respectively,
wherein the housing includes a wireless communication region formed of a non-conductive material and a covering region surrounding the wireless communication region and formed of a material different from the material included in the wireless communication region, and
wherein each of the plurality of cell monitoring units is disposed between the plurality of battery cells and the wireless communication region.

12. . The battery apparatus of claim 11, wherein the cooling port includes
an inlet cooling port disposed on one side of the housing and allowing the cooling fluid to flow into the accommodation space, and
an outlet cooling port disposed on the other side of the housing and allowing the cooling fluid to flow out from the accommodation space, and
the covering region is conductive,
wherein, optionally, an arrangement direction of the plurality of cell monitoring units is not parallel to a direction in which the inlet cooling port and the outlet cooling port face each other, and
wherein the cell assembly is optionally disposed to allow at least a portion of the cooling fluid to flow, in the accommodation space, through a space between the plurality of cell monitoring units and the wireless communication region.

13. . The battery apparatus of claim 11 or 12, wherein the plurality of cell monitoring units is arranged in an arrangement direction of the plurality of battery cells, and
wherein the wireless communication region extends in an arrangement direction of the plurality of cell monitoring units.

14. . The battery apparatus of any one of claims 11 to 13, wherein each of the plurality of cell monitoring units converts a monitoring value for each of the plurality of battery cells into a wireless communication signal and transmits the wireless communication signal to an exterior of the accommodation space through the wireless communication region.

15. . The battery apparatus of any one of claims 11 to 14, wherein each of the plurality of cell monitoring units monitors at least one of a voltage, an internal resistance, a current, a temperature of a corresponding battery cell, or a combination thereof among the plurality of battery cells, and
wherein each of the plurality of cell monitoring units includes a semiconductor integrated circuit electrically connected between at least two lead tabs of the corresponding battery cell among the plurality of battery cells.
